# EUROPÄISCHE PATENTSCHRIFT

(11) **EP 0 355 263 B1**
(45) Veröffentlichungstag und Bekanntmachung des Hinweises auf die Patenterteilung: **02.03.1994**
(21) Anmeldenummer: 89107424.7
(22) Anmeldetag: 25.04.1989
(51) Int. Cl.: H02K 37/14, H02K 37/22, H02K 3/46, H02K 7/116, H02K 5/167, G04C 13/11

(54) **Motor, insbesondere zum Antrieb eines Uhrwerkes**
Motor, in particular for driving a time piece
Moteur, en particulier pour entraîner une pièce d'horlogerie

(30) Priorität: 22.08.1988 DE 3828465
(43) Veröffentlichungstag der Anmeldung: 28.02.1990
(73) Patentinhaber: VDO Adolf Schindling AG, D-60487 Frankfurt (DE)
(72) Erfinder: Sudler, Roland, D-6000 Frankfurt/Main (DE)
(74) Vertreter: Klein, Thomas, Dipl.-Ing. (FH)

(56) Entgegenhaltungen:
- EP-A- 0 238 317
- CH-A- 448 240
- US-A- 4 115 713
- PATENT ABSTRACTS OF JAPAN vol. 10, no. 150 (E-408)(2207) 31. Mai 1986 & JP-A-61 009 149 (HITACHI) 16. Januar 1986
- PATENT ABSTRACTS OF JAPAN vol. 5, no. 149 (E-75)(821) 19. September 1981 & JP-A-56 081 068 (TOKYO SHIBAURA) 2. Juli 1981

## Beschreibung

Die Erfindung bezieht sich auf einen Motor zum elektrischen Antrieb eines Uhrwerks mit
- einem zusammen mit einer Welle drehbar gelagerten Rotor, der aus einem Dauermagneten mit diametral gegenüberliegenden Magnetpolen besteht,
- einer Spulenanordnung,
- einem Spulenkörper aus nicht ferromagnetischem Material, der innen zylindrisch geformt und außen mit in Umfangsrichtung äquidistant angeordneten, außen zylindrischen Stegen versehen ist und
- einem auf den Spulenkörper aufgeschobenen Abschirmring.

Ein derartiger Motor ist aus der US-A-41 15 713 bekannt. Dabei handelt es sich um einen Miniatur-Motor, bei dem ein hohler Spulenkörper für zwei parallel zueinander angeordneten Spulen vorgesehen ist. Der Rotor ist in zwei Lagerschilden gelagert, die in den Spulenkörper eingesetzt sind und mittels der Wicklungen im Spulenkörper gehalten werden. Der Spulenkörper wird von einem Abschirmring umgeben, der aus einem Material hoher Permeabilität bestehen soll.

Bei einem derartigen Motor sind die Ansteuermöglichkeiten wegen der parallel angeordneten Spulen begrenzt. Er besitzt außerdem kein nennenswertes Haltemoment, so daß der Rotor bei unbestromten Spulen durch äußere Einflüsse leicht verstellbar ist und die Ganggenauigkeit einer damit betriebenen Uhr nicht gewährleistet werden kann.

Bei einem anderen bekannten Motor zum Antrieb eines Uhrwerks weist ein drehbar gelagerter Rotor sich diametral gegenüberliegende Dauermagnetpole auf (DE-OS 34 19 100). Eine mehrphasige Spulenanordnung dient zur Erzeugung eines den Rotor auslenkenden Magnetfelds in Abhängigkeit von Ansteuersignalen, die an Spulen der Spulenanordnung anliegen. Die Spulenanordnung weist dazu mehrere, mit gleichem Winkelabstand zueinander angeordnete, den Rotor umschließende Spulen ohne einen Statorkörper hoher magnetischer Leitfähigkeit und ohne magnetischen Rückschluß auf, die mit um eine bestimmte Phasenverschiebung versetzten Sinus-Spannungen ansteuerbar sind. Insbesondere besteht die Spulenanordnung aus zwei rechtwinklig zueinander angeordneten Spulen, die mit zwei um 90 Grad versetzten Sinus-Spannungen gespeist werden. Die Drehachse bzw. Welle kann die Sekundenwelle oder die Minutenwelle des Uhrwerks darstellen. Im letztgenannten Fall ist an einem Ende der Drehachse ein Minutenanzeiger befestigt, der über ein Zifferblatt bewegt werden kann. Über ein auf der Drehachse angeordnetes Antriebsritzel und ein Wechselrad wird ein Stundenrad angetrieben, welches ein die Drehachse umschließendes Stundenrohr aufweist. Auf dem Stundenrohr ist ein über das Ziffernblatt bewegbarer Stundenzeiger befestigt. - Bei diesem Motor, der mit Sinus-Spannungen fortlaufend zu speisen ist, ist ein entsprechend hoher Energieaufwand nachteilig. Das gilt insbesondere beim Einsatz des Motors zum Antrieb einer Uhr, bei dem der Raum zur Unterbringung einer Batterie beschränkt ist.

Zum Stand der Technik gehört ferner ein elektrisches Tachometer mit einem Impulsmotor und einem an diesen angeschlossenen Getriebe, welches eine hydraulische Dämpfungseinrichtung einschließt (EP-OS 0 048 459). Die Dämpfungseinrichtung umfaßt eine Feder, über welche ein mit einer Motorwelle in Verbindung stehendes Schneckenrad mit einer Zeigerwelle verbunden ist, und die Zeigerwelle ragt in einen Öl-Dämpfertopf. Der Motor weist Spulen mehrerer Pole auf, die durch eine elektronische Steuereinrichtung mit unterschiedlichen Pulsen je nach der zur Anzeige der Geschwindigkeit erforderlichen Drehrichtung der Zeigerwelle gespeist werden. Einzelheiten des Motors sind nicht offenbart.

Soweit jedoch andere bekannte Schrittmotore, die mit Impulsen gespeist werden können, einen Eisen-Stator aufweisen, der eine Rastwirkung erzeugt, handelt es sich um einphasige Schrittmotoren, die nur in einer Drehrichtung betrieben werden können und somit keine Rückstellung gestatten. Die Herstellung des ferromagnetischen Stators mit ausgeprägten Polen ist aufwendig. Unter Umständen tritt ein Überschwingen des Rotors beim Einlauf in die Raststellungen auf. Eine gesonderte Dämpfung ist dann erforderlich, wenn ein solcher Geräusche verursachender Einlauf vermieden werden soll.

Der Erfindung liegt die Aufgabe zugrunde, einen Motor zum elektrischen Antrieb eines Uhrwerks der eingangs genannten Gattung so weiterzubilden, daß die Ansteuermöglichkeiten verbessert werden und daß eine Rastwirkung der Rotorbewegung erzielt werden kann, ohne daß der Stator aus ferromagnetischem Material mit ausgeprägten Polen hergestellt werden muß. Der Motor soll unkompliziert aufgebaut sein und eine kostengünstige Fertigung gestatten. Angestrebt wird eine Rastwirkung, bei der ein unerwünscht harter Einlauf in die Raststellungen vermieden wird. Außerdem soll der Motor in beiden Richtungen betrieben werden können. um beispielsweise bei einer Uhr einen schnellen Stellenvor- und Rücklauf zu gestatten.

Zur Lösung dieser Aufgabe wird bei einem gattungsgemäßen Motor vorgeschlagen, daß
- die Spulenanordnung aus zwei im Winkelabstand von 90 Grad zueinander angeordneten Spulen besteht und
- der Abschirmring aus einem Material hoher Restkoerzitivfeldstärke besteht.

In vorteilhafter Weise wird hier eine definierte Rastwirkung ohne ausgeprägte ferromagnetische Pole des Stators durch den Abschirmring aus einem Material hoher Restkoerzitivfeldstärke erzielt. Der Abschirmring kann besonders einfach als zylindrischer Hohlzylinder geformt sein und auf die außenzylindrisch verlaufenden Stege des Spulenkörpers aufgeschoben werden. Ein Überschwingen des Rotors wird durch die hohe Restkoerzitivfeldstärke des Rückschlußrings stark gedämpft, so daß eine Geräuschminderung erreicht wird. Trotzdem ist das Haltemoment im nichterregten Zustand des Stators genügend groß. Der Motor kann daher mit kurzen Impulsen angesteuert werden, die nur eine geringe mittlere Stromaufnahme darstellen. Je nach der Ansteuerung des Motors kann dieser unterschiedliche Raststellungen bzw. Rastschritte bei gleichbleibender konstruktiver Ausführung realisieren, so daß beispielsweise wahlweise ein Minutenspringer bzw. ein Halbminutenspringer bei gleichem Getriebe verwirklicht werden kann.

Als hohe Restkoerzitivfeldstärke, welche der Abschirmring aufweisen soll, kann eine Größe von mindestens 50 Öe ausgewählt werden. Als besonders zweckmäßig hat sich die Auswahl des Materials für den Abschirmring mit einer Restokerzitivfeldstärke von 80 - 100 Öe erwiesen.

Eine herstellungstechnische und insbesondere zur Montage besonders günstige Gestaltung des Spulenkörpers, der den Abschirmring aufnimmt, ist in Anspruch 4 angegeben. - Damit wird in konstruktiv unkomplizierter Weise ein Grundsystem einer Quarzuhr insbesondere mit Vor- und Rückwärtsschnellverstellmöglichkeit mit dem Motor und mit einem Uhrengetriebe in einem Zwischenkörper geschaffen, welches je nach Anwendungsfall baukastenartig modifiziert werden kann. Der Motor ist so gestaltet, daß er mit im Inneren verschieden gestalteten Zwischenkörpern, z.B. mit einem Uhrengetriebe mit oder ohne Sekundenzeigerwelle, ohne sonstige Änderungen zusammengesetzt werden kann. Die Montage sämtlicher Modifikationen kann somit zeit- und kostengünstig erfolgen. Hierzu trägt insbesondere der geteilte Spulenkörper mit den an seinem einen Teil nach der vorderen Außenseite herausragenden nasenförmigen Klipsen bei, an denen der Zwischenkörper angeklammert werden kann. In jedem Fall erfolgt durch die nasenförmigen Klipse an dem Spulenkörper eine genaue Zentrierung sowie die lagerichtige Zuordnung und Befestigung des Zwischenkörpers. Der Zwischenkörper kann zur Befestigung eines Ziffernblatts dienen.

Nach Anspruch 5 wird das exakte Aufschieben des konzentrischen Abschirmrings auf den Spulenkörper konstruktiv einfach gesichert.

Zur einfachen Fertigung der Bauteile des Motors sowie dessen Montage ist weiterhin nach Anspruch 6 vorteilhaft der Spulenkörper im wesentlichen in einer Querschnittsebene, d.h. senkrecht zu der zwischen den beiden Teilen des Spulenkörpers eingebauten Welle geteilt.

Zum Erreichen der voranstehend genannten Vorteile ist weiterhin zweckmäßig aus jedem der beiden Teile des Spulenkörpers eines der Lager der Welle ausgeformt. - Der Rotor wird zwischen den beiden Lagern in dem zylindrischen Innenraum des Spulenkörpers angeordnet. Zwei Wicklungen werden auf dem Spulenkörper als Stator um 90° gegeneinander verdreht so aufgebracht, daß sich die Leiter parallel zu der Welle jeweils zwischen zwei längs des Umfangs benachbarten Stegen befinden.

Nach Anspruch 8 kann das Ritzel auf der Motorwelle direkt in das aufgesetzte Uhrengetriebe eingreifen.

Die durch die achsparallelen Bohrungen gesteckten Anschlußstifte, an denen die Kreuzspul-Drehmagnetanordnung befestigt werden kann, ragen nach Anspruch 9 auf einer Außenseite, insbesondere der vorderen Außenseite, aus dem Spulenkörper und gegebenenfalls dem auf diesem aufgesetzten Uhrengetriebe in dem Zwischenkörper heraus. An den vorne herausragenden Anschlußstiften kann ein Ziffernblatt befestigt werden.

Die Erfindung wird im folgenden anhand einer Zeichnung mit sechs Figuren erläutert. Es zeigen:
- Figuren 1a - 1d: in schaubildlicher Ansicht eine Ausführungsform des Motors mit einem in dem Zwischenkörper angeordneten Getriebe, und zwar in den Figuren 1b - 1d mit jeweils zunehmendem Zerlegungsgrad des Motors in der Art von Explosionszeichnungen;
- Figur 2: einen Längsschnitt im wesentlichen durch den Motor mit aufgesetztem Abschirmring und Ritzel;
- Figur 3: eine Ansicht auf die Wellen-Seite des Motors nach Figur 2;
- Figur 4: ein stark vereinfachtes Blockschaltbild einer Quarzuhr mit dem Motor und einer Steuerlogik;
- Figuren 5a,5b: zeitliche Verläufe von Spannungen, mit denen Spulen der Quarzuhr nach Fig. 4 als 1/2Minutenspringer gespeist werden.
- Figuren 6a,6b: entsprechende zeitliche Verläufe der Spannungen bei einer Ansteuerung der Quarzuhr in einer zweiten Variante als Minutenspringer.

Aus Fig. 1a ist im zusammengesetzten Zustand eine Motoranordnung ersichtlich, die zum Antrieb einer Quarzuhr dienen soll. Sie besteht im wesentlichen aus einem Motor 1 und einem auf diesen aufgesetzten Zwischenkörper 2, der ein Uhrengetriebe beinhaltet. Die Längsabmessungen des Motors und des Zwischenkörpers ergeben die gesamte Höhe h der Motoranordnung, die für den Einbau maßgeblich ist. Aus Fig. 1a ist weiterhin eine Abtriebswelle 3 ersichtlich, die exzentrisch aus dem Zwischenkörper 2 nach vorne herausragt. Durch die Anordnung hindurchreichende Anschlußstifte, die beidseitig an den Außenseiten dieser Anordnung herausragen, sind mit 4 - 7 bezeichnet. Die vordere Außenseite der Anordnung ist mit 8 bezeichnet; sie wird durch eine Platine 9 gebildet, welche den Zwischenkörper vorne abschließt. Die Außenseiten des Motors selbst sind in Fig. 1a verdeckt.

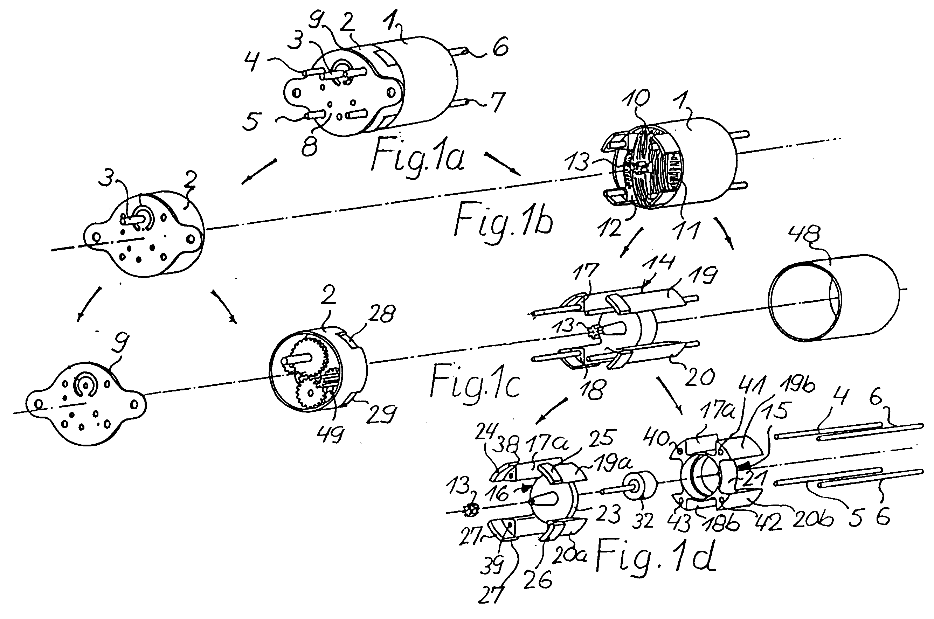

In Fig. 1b ist der Zwischenkörper, welcher das Uhrengetriebe beinhaltet, von dem Motor abgenommen, so daß in dem Motor zwei zueinander in einem Winkelabstand von 90° angeordnete Spulen 10 und 11 erkennbar sind, die zusammen eine Kreuzspule oder eine zwei-phasige Wicklung eines Schrittmotors bilden. - Aus einer vorderen Außenseite 12 des Motors ragt ein auf einer Welle befestigtes Ritzel 13 heraus, welches, wie weiter unten beschrieben, so in das Uhrengetriebe in dem Zwischenkörper eingeführt werden kann, daß es mit einem Zahnrad in dem Getriebe in Eingriff gelangt.

Aus den Figuren 1c und 1d sind weitere Einzelheiten des Aufbaus insbesondere des Motors erkennbar, wobei in Fig. 1d das Getriebe mit der Platine des Zwischenkörpers nicht mehr dargestellt sind:

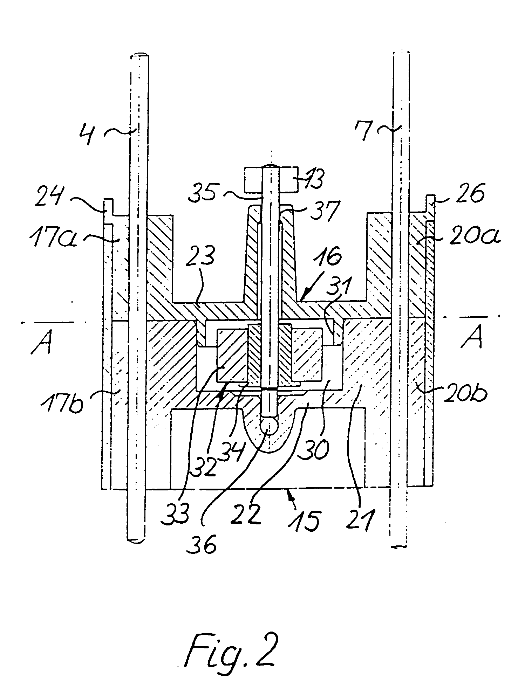

Danach besteht ein allgemein mit 14 bezeichneter Spulenkörper, der im wesentlichen in einer Querschnittsebene A-A geteilt ist - siehe Fig. 2 - aus zwei Spulenkörperteilen 15 und 16 aus nicht ferromagnetischem Material.

Der Spulenkörper 15 ist innen zylindrisch geformt und weist vier Stege 17 - 20 auf, deren Außenseiten zylindrisch gekrümmt sind. Gemäß Fig. 1d sind die Stege aus je einem vorderen Stegabschnitt 17a, 18a, 19a, 20a und einem hinteren Stegabschnitt 17b, 18b, 19b, 20b zusammengesetzt, welche die gleichen Querschnittsformen aufweisen. Die Stege sind so geformt, daß sie zwischen sich Kammern zur Aufnahme der beiden Spulen 10 und 11 bilden. Die hinteren Stegabschnitte 17b, 18b, 19b, 20b laufen zu einem zylindrischen Ring 21 zusammen, der innen durch eine Zwischenwand 22 - siehe Fig. 2 - geschlossen ist. Die vorderen Stegabschnitte 17a, 18a, 19a, 20a sind hingegen an einer vorderen Wand 23 angeformt. Von den vorderen Stegabschnitten 17a, 18a, 19a, 20a stehen zungenartige Klipse 24, 25, 26, 27 über, die zum form- und kraftschlüssigen Eingriff in entsprechende Ausnehmungen des Zwischenkörpers 2 vorgesehen sind, um diesen klammernd zu halten. In Fig. 1c sind hiervon die Ausnehmungen 28 und 29 erkennbar. Die Ausnehmungen sind nutenförmig und dienen, da äquidistant über den Umfang des Zwischenkörpers verteilt, auch zur Zentrierung.

Der zylindrische Ring 21 des Spulenkörperteils 15 schließt einen ebenfalls zylindrischen Innenraum 30 ein, der nach vorne bzw. in Fig. 2 oben durch die mit einem zylindrischen Innenraum 30 ein, der nach vorne bzw. in Fig. 2 oben durch die mit einem zylindrischen Ansatz 31 versehene vordere Wand 23 des Spulenkörperteils 16 abgeschlossen ist. In dem zylindrischen Innenraum 30 ist ein Rotor gelagert, der allgemein mit 32 bezeichnet ist. Der Rotor besteht im wesentlichen aus einem Dauermagneten 33, der einander diametral gegenüberliegende Pole bildend magnetisiert ist. Der Rotor ist über eine Nabe 34 auf einer Welle 35 befestigt. Die Welle ist in je einem Lager 36 bzw. 37 in jedem der beiden Spulenkörperteile 15 bzw. 16 drehbar gelagert. An einem vorderen, aus dem Spulenkörperteil 16 hervorragenden Ende der Welle ist auf dieser ein Ritzel 13 fixiert.

Aus den Figuren 1c, 1d und 2 ist weiterhin ersichtlich, daß durch Bohrungen, z.B. 38, 39 in dem Spulenkörperteil 16 sowie Bohrungen 40 - 43 in dem Spulenkörperteil 15, die paarweise miteinander fluchten, die Anschlußstifte 4 - 7 steckbar sind, die zur Anbringung weiterer Komponenten, wie z.B. ein Zifferblatt, oder zur Befestigung des Motors mit Getriebe in einem Gehäuse dienen können.

Weiterhin ist aus den Figuren 1c und 2 entnehmbar, wie außen auf die Stege ein zylindrischer Abschirmring 48 aus ferromagnetischem Material aufgeschoben wird, der zur Erzeugung eines Rast- oder Haltemoments ohne Erregung aus einem ferromagnetischen Material mit hoher Restkoerzitivfeldstärke von 6366-7957 A/m besteht.

Aus Figur 1c ergeben sich weiterhin Einzelheiten des in dem Zwischenkörper vorgesehenen Getriebes, welches auf den Motor aufgesteckt bzw. geklipst werden kann. Das Ritzel 13 auf der Welle 35 kann durch eine Öffnung 58 so in den Zwischenkörper gesteckt werden, daß es mit einem ersten Zahnrad des Getriebes in Eingriff gelangt. - Im übrigen stellen die Figuren das Getriebe 2 nicht unbedingt als typisches Uhrengetriebe dar, welches typisch konzentrisch zu einer Abtriebswelle, an der z.B. ein Minutenzeiger befestigt ist, ein Stundenrohr aufweist. Das Stundenrohr wird normalerweise über Getrieberäder von der Abtriebswelle angetrieben.

Eine andere Ausführungsform eines Uhrengetriebes weist einen direkt von der Motorwelle angetriebenen Sekundenzeiger auf, zu dem konzentrisch ein Minutenrohr und ein Stundenrohr gelagert sind, die untereinander in Getriebeverbindung stehen.

Aus Fig. 2 ist ersichtlich, wie das Lager 36 so ausgebildet ist, daß es auch axiale Kräfte aufnehmen kann, d.h. der Motor in der gezeichneten lotrechten Stellung betrieben werden kann.

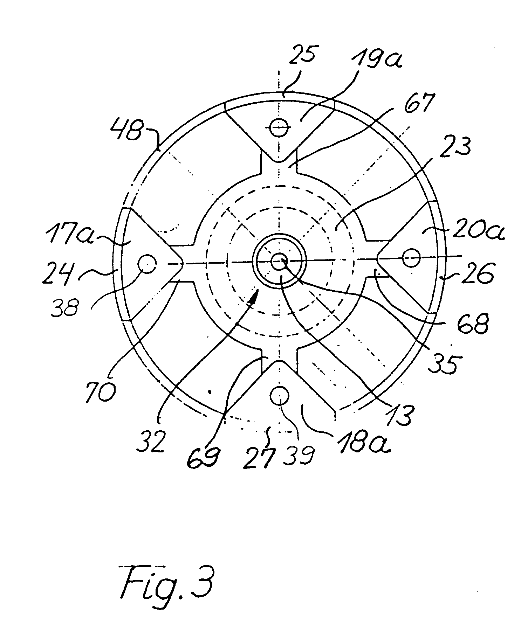

Aus Fig. 3 geht eine Ansicht auf die Vorderseite des Kreuzspul-Drehmagnetwerks ohne aufgesetzten Zwischenkörper hervor: Erkennbar sind die äquidistant längs des Umfangs des im wesentlichen zylindrischen Spulenkörper angeordneten Stege bzw. Stegabschnitte 17a, 18a, 19a, 20a mit den vorstehenden Klipsen 24 - 27, an deren rückwärtige Stirnseiten der auf den Spulenkörper aufgeschobene Abschirmring 48 anstößt. Die Stegabschnitte gehen an den Stellen 67 - 70 in die vordere Wand 23 über. Erkennbar ist weiterhin die zentrale Welle 35, an der das Ritzel 13 befestigt ist. Der durch die vordere Wand 23 abgedeckte Rotor 32 ist lediglich mit einer unterbrochenen Linie angedeutet.

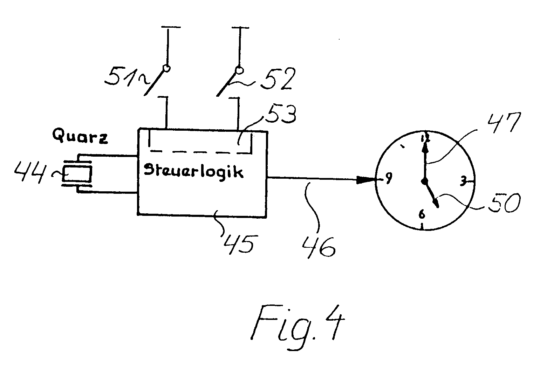

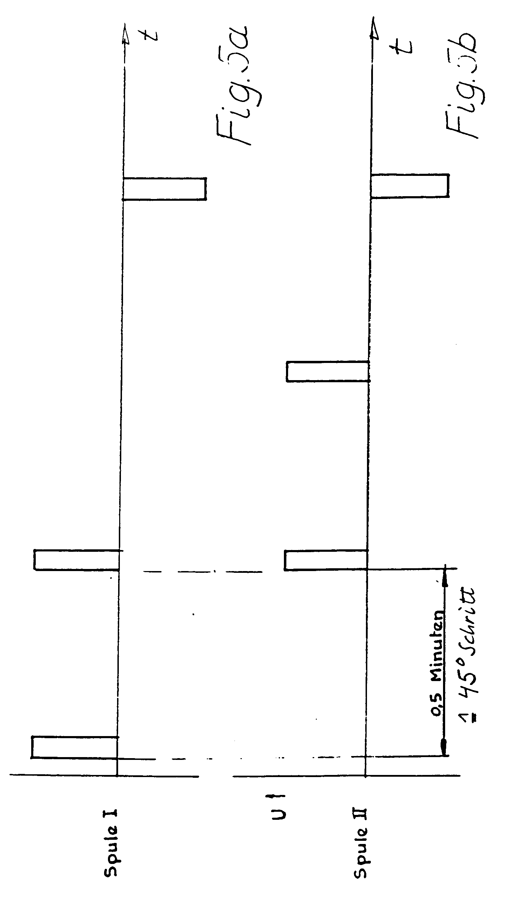

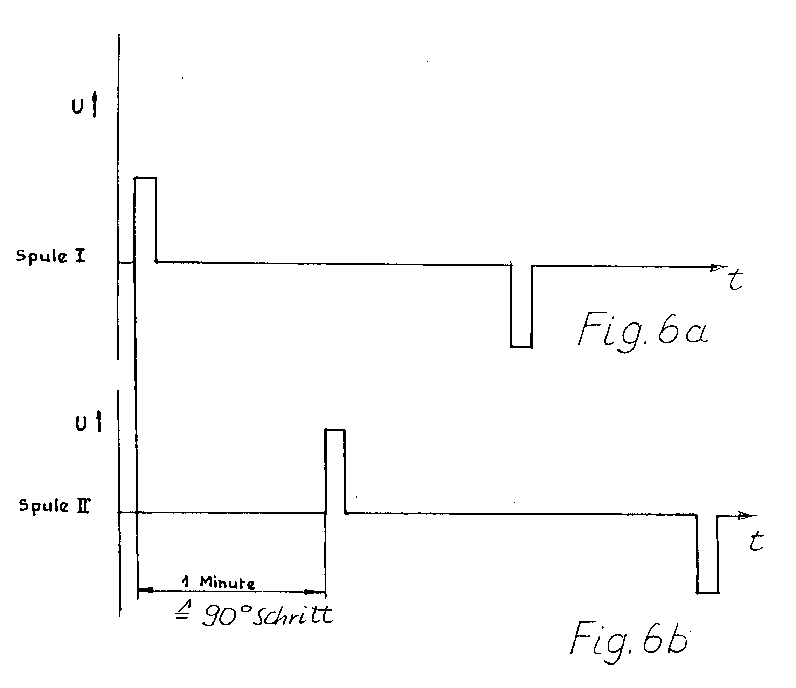

Die elektrische Ansteuerung des Motors einer Quarzuhr erfolgt gemäß Fig. 4 mit einem Quarz 44 als frequenzbestimmendes Element eines Schwingungssystems, welches in einer Steuerlogik 45 enthalten ist und über einen einstellbaren Frequenzteiler Impulse für die beiden Spulen I und II in den Figuren 5a, 5b, 6a und 6b erzeugt, die den Spulen 10 und 11 der Fig. 1 entsprechen. Der Aufbau der Steuerlogik ergibt sich aus der Darstellung der Folgen der Stellimpulse gemäß den Figuren 5a, 5b, 6a und 6b. Diese Stellimpulse werden über eine Leitung 46 in die beiden Spulen des Motors eingespeist, der einen Minutenzeiger 47 und einen Stundenzeiger 50 verstellt.

Wie die Figuren 5a und 5b zeigen, folgen die Stellimpulse, die von der Steuerlogik 45 erzeugt werden, normalerweise in einem Abstand von 30 Sekunden für mindestens eine Spule aufeinander. Die Stellimpulse können dabei jeweils eine von zwei möglichen Polaritäten annehmen. Bei jedem Stellimpuls wird der Motor um einen Schritt von 45° verstellt. Das Uhrengetriebe ist so dimensioniert, daß diesem 45°-Schritt des Motors ein Sprung von einer halben Minute des Minutenzeigers entspricht. Es wird also zwischen je einer Verstellung um eine Minute ein Zwischenschritt von einer halben Minute gebildet.

Die Stellimpulsfolgen gemäß den Figuren 6a und 6b sind hingegen dadurch gekennzeichnet, daß jede Minute mindestens ein Impuls für eine der beiden Spulen erzeugt wird. Der Motor legt bei jedem neuen Impuls einen Schritt von 90° zurück, der über das Getriebe in einen Sprung des Minutenzeigers um eine Minute umgewandelt wird.

Aus Fig. 4 sind noch zwei Stellkontakte 51 und 52 erkennbar, die über den einstellbaren Frequenzteiler 53 auf die Steuerlogik einwirken. Beim Schließen eines der beiden Stellkontakte 51 oder 52 wird das Teilungsverhältnis des Frequenzteilers z.B. so geändert, daß eine im Normalbetrieb von dem Frequenzteiler abgegebene Frequenz von z.B. 0,1666 Hz auf eine Frequenz von z.B. 25 Hz erhöht wird. Zugleich wird durch Betätigung des Stellkontakts 52 die Steuerlogik so umgeschaltet, daß Impulsfolgen für den Rückwärtslauf erzeugt werden, bei denen die Folge der Impulse gegenüber den Zeitdiagrammen in den figuren 5a, 5b, 6a und 6b sinngemäß geändert sind.

## Patentansprüche

1. Motor (1) zum elektrischen Antrieb eines Uhrwerks mit
- einem zusammen mit einer Welle (35) drehbar gelagerten Rotor (32), der aus einem Dauermagneten (33) mit diametral gegenüberliegenden Magnetpolen besteht,
- einer Spulenanordnung (10, 11),
- einem Spulenkörper (14) aus nicht ferromagnetischem Material, der innen zylindrisch geformt und außen mit in Umfangsrichtung äquidistant angeordneten, außen zylindrischen Stegen (17-20) versehen ist und
- einem auf den Spulenkörper (14) aufgeschobenen Abschirmring (48),
dadurch gekennzeichnet, daß
- die Spulenanordnung aus zwei im Winkelabstand von 90 Grad zueinander angeordneten Spulen (10, 11) besteht und
- der Abschirmring (48) aus einem Material hoher Restkoerzitivfeldstärke besteht.

2. Motor nach Anspruch 1,
**dadurch gekennzeichnet**,
daß der Abschirmring (48)aus einem Material besteht, welches eine Restkoerzitivfeldstärke von mindestens 3978 A/m aufweist.

3. Motor nach Anspruch 2,
**gekennzeichnet durch**
einen Abschirmring (48) aus einem Material einer Restkoerzitivfeldstärke von 6366 - 7957 A/m.

4. Motor nach Anspruch 1,
**dadurch gekennzeichnet**,
daß der Spulenkörper (14) in zwei Teile (15, 16) geteilt ist, daß Lager (36, 37) der Welle (35) des Rotors (32) dergestalt ausgeformt sind, daß die Welle auf wenigstens einer vorderen Außenseite (12) aus dem Spulenkörper (14) herausragt, daß auf dieser Außenseite einer der beiden Teile (15, 16) des Spulenkörpers (14) nasenförmige Klipse (24 - 27) zur klammernden Anbringung eines ein Uhrengetriebe einschließenden Zwischenkörpers (2) aufweist und daß in dem Spulenkörper (14) parallel zu der Welle (35) Bohrungen (38 - 43) für Anschlußstifte (4 - 7) vorgesehen sind.

5. Motor nach Anspruch 4,
**dadurch gekennzeichnet**,
daß der konzentrische Abschirmring (48) auf dem Spulenkörper (14) an einer erhabenen Innenseite der Klipse (24 - 27) axial anstößt.

6. Motor nach Anspruch 4 oder 5.
**dadurch gekennzeichnet**,
daß der Spulenkörper (14) im wesentlichen in einer Querschnittsebene (A-A) geteilt ist.

7. Motor nach Anspruch 6,
**dadurch gekennzeichnet**,
daß aus jedem der beiden Teile (15, 16) des Spulenkörpers (14) eines der Lager (36, 37) der Welle (35) ausgeformt ist.

8. Motor nach einem der Ansprüche 4 - 7
**dadurch gekennzeichnet**,
daß in das in dem Zwischenkörper (2) eingeschlossene Uhrengetriebe die aus der vorderen Außenseite (12) des Spulenkörpers (1) herausragende Welle (35) mittels eines Ritzels (13) eingreift.

9. Motor nach einem der Ansprüche 4 - 8,
**dadurch gekennzeichnet**,
daß die Anschlußstifte (4 - 7) zumindest aus einer der Außenseiten des Spulenkörpers (14) herausragen.

## Claims

1. A motor (1) for the electrical drive of a clock mechanism, having
- a rotor (32) rotatably mounted together with a shaft (35), which rotor consists of a permanent magnet (33) with diametrically opposed magnet poles,
- a coil arrangement (10, 11),
- a coil housing (14) made of non-ferromagnetic material, which is shaped cylindrically inside and which is provided on the outside with externally cylindrical webs (17 - 20) disposed equidistantly around the circumference, and
- a screening ring (48) slipped on to the coil housing (14),
characterised in that
- the coil arrangement consists of two coils (10, 11) disposed at an angular separation of 90 degrees from each other, and
- the screening ring (48) consists of a material with a high residual coercive field strength.

2. A motor according to claim 1, characterised in that the screening ring (48) consists of a material which has a residual coercive field strength of at least 3978 A/m.

3. A motor according to claim 2, characterised by a screening ring (48) made of a material with a residual coercive field strength of 6366 - 7957 A/m.

4. A motor according to claim 1, characterised in that the coil housing (14) is split into two parts (15, 16), that bearings (36, 37) of the shaft (35) of the rotor (32) are constructed in such a way that the shaft projects from the coil housing (14) on at least one front external face (12), that one of the two parts (15, 16) of the coil housing (14) has lug-shaped clips (24 - 27) on this external face for the clamped attachment of an intermediate body (2) which includes a clock mechanism, and that holes (38 - 43) for connection pins (4 - 7) are provided in the coil housing (14) parallel to the shaft (35).

5. A motor according to claim 4, characterised in that the concentric screening ring (48) on the coil housing (14) axially adjoins a raised internal face on the clips (24 - 27).

6. A motor according to claim 4 or 5, characterised in that the coil housing (14) is split essentially on a transverse plane (A-A).

7. A motor according to claim 6, characterised in that one of the bearings (36, 37) of the shaft (35) is formed from each of the two parts (15, 16) of the coil housing (14).

8. A motor according to any one of claims 4 to 7, characterised in that the shaft (35) projecting from the front external face (12) of the housing (1) engages by means of a pinion (13) in the clock mechanism enclosed in the intermediate body (2).

9. A motor according to any one of claims 4 to 8, characterised in that the connection pins (4 - 7) project from at least one of the external faces of the coil housing (14).

## Revendications

1. Moteur (1), destiné à entraîner électriquement un mécanisme d'horlogerie et comportant
un rotor (32) monté de façon à tourner avec un arbre (35) et qui est composé d'un aimant permanent (33) à pôles diamétralement opposés ;
un jeu de bobines (10, 11) ;
une carcasse (14) porte-bobines en une matière non ferromagnétique, qui est intérieurement cylindrique et comporte extérieurement des bras (17-20) à profil extérieur cylindrique, équidistants dans le sens de sa périphérie, et
un blindage annulaire (48) placé sur cette carcasse (14),
moteur caractérisé en ce que
le jeu de bobines est composé de deux bobines (10, 11) disposées à 90° l'une de l'autre, et
le blindage annulaire (48) est en une matière qui présente un champ coercitif résiduel de forte intensité.

2. Moteur selon la revendication 1, caractérisé en ce que le blindage annulaire (48) est en une matière à champ coercitif résiduel d'au moins 3 978 A/m.

3. Moteur selon la revendication 2, caractérisé par un blindage annulaire (48) en une matière présentant un champ coercitif résiduel dont l'intensité est comprise entre 6 366 et 7 957 A/m.

4. Moteur selon la revendication 1, caractérisé en ce que la carcasse (14) porte-bobines est divisée en deux parties (15, 16) ; en ce que les paliers (36, 37) de l'arbre (35) du rotor (32) sont conformés de façon que cet arbre dépasse d'au moins la face antérieure (12) de cette carcasse (14) ; en ce que cette face de l'une des parties (15, 16) de la carcasse (14) comporte des lamelles élastiques (24-27) destinées à retenir en s'y accrochant un corps intermédiaire (2) qui contient un mécanisme d'horlogerie et en ce que des trous (38-43) destinés à laisser passer des broches d'assemblage (4-7) sont formés dans la carcasse (14) parallèlement à l'arbre (35).

5. Moteur selon la revendication 4, caractérisé en ce que le blindage annulaire (48) concentrique bute axialement contre la carcasse (14) porte-bobines sur un flanc intérieur proéminent des lamelles élastiques (24-27).

6. Moteur selon la revendication 4 ou 5, caractérisé en ce que la carcasse (14) porte-bobines est divisée en deux dans un plan transversal (A-A).

7. Moteur selon la revendication 6, caractérisé en ce que l'un des paliers (36, 37) de l'arbre (35) est façonné dans chacune des parties (15, 16) de la carcasse (14) porte-bobines.

8. Moteur selon l'une des revendications 4 à 7, caractérisé en ce que l'arbre (35), qui fait saillie de la face antérieure (12) de la carcasse (14) porte-bobines, vient en prise, au moyen d'un pignon (13), avec le mécanisme d'horlogerie contenu dans le corps intermédiaire (2).

9. Moteur selon l'une des revendications 4 à 8, caractérisé en ce que les broches d'assemblage (4-7) dépassent d'au moins l'une des faces extérieures de la carcasse (14) porte-bobines.
